# EUROPEAN PATENT APPLICATION

(11) **EP 2 166 496 A1**
(43) Date of publication of application: **24.03.2010**
(21) Application number: 09169526.2
(22) Date of filing: 04.09.2009
(51) Int. Cl.: G06Q 10/00

(54) **Method, system, and computer for analytical reporting and archiving of data**

(30) Priority: 09.09.2008 US 207181
(71) Applicant: GE Fanuc Intelligent Platforms, INC., Route 29 North And Route 606 Po Box 8106 Charlottesville, VA 22911 (US)
(72) Inventor: Hussain, Ahmir, Loudonville, NY 12211 (US); Blaauboer, James E., Clifton Park, NY 12065 (US); Hodgin, Stephen P., Lee, MA 01238 (US)
(74) Representative: Illingworth-Law, William Illingworth

(57) **Abstract**

A network-based system (100) for archiving and analyzing manufacturing execution data stored on at least one manufacturing data source database is provided. The system includes a client system (104), a database (108) for storing information, and a server system (102) coupled to the client system and the database. The server system is configured to receive a user selection of the at least one manufacturing execution data source database having the manufacturing execution data stored thereon, the manufacturing execution data including at least one of database tables, database views, and database scripts, extract (404) at least a selected portion of the manufacturing execution data from the at least one manufacturing execution data source database without further input from the user, store the extracted manufacturing execution data in the database, automatically format the stored manufacturing execution data in a predefined format, and analyze (412) the formatted manufacturing execution data according to a predefined report format.

## Description

### BACKGROUND OF THE INVENTION

The field of the invention relates generally to enterprise data and, more specifically, to archiving and analyzing enterprise manufacturing data using an integrated intelligence platform.

As the amount of data that is collected relating to product manufacturing increases, additional storage becomes necessary using systems such as datamarts and/or datawarehouses. As such, at least some known systems include applications that are created for only a specific manufacturer to extract data into a separate datamart. In addition, analysis of such an increased amount of data becomes more difficult due to an additional amount of processing time that becomes necessary. As such, at least some known systems provide applications that are created for only a specific manufacturer to analyze the data and develop reports based on the data.

However, such systems are not scalable as the amount of collected data continues to increase, which increases the potential for such a system to be burdened with user requests at the same time the system is attempting to execute manufacturing-related operations. This may cause production to be negatively affected due to system unavailability. Moreover, such systems require a large amount of resources for deployment due to the specialized skills necessary for configuring such systems to extract and/or analyze the data. Further, such systems require service personnel with specialized skills, such as knowledge of a manufacturer's particular data model, when adding additional data sources or reprogramming the reports. In addition, such systems require system administrators must manually establish a new data feed from an additional plant when data currently stored at the plant is to be stored within such systems.. Moreover, system administrators are required to manually program data extraction logic in order to extract data from currently monitored plants as well as newly added plants.

Accordingly, it is desirable to provide a single platform for selecting multiple sources of manufacturing data, extracting the data, assigning common process attributes to the data, aggregating the data, and enabling users to analyze the data and generate reports.

### BRIEF DESCRIPTION OF THE INVENTION

This Brief Description is provided to introduce a selection of concepts in a simplified form that are further described below in the Detailed Description. This Brief Description is not intended to identify key features or essential features of the claimed subject matter, nor is it intended to be used as an aid in determining the scope of the claimed subject matter.

In one aspect, a method for archiving and analyzing manufacturing execution data using a server coupled to a database is provided, wherein the data includes database tables, database views, and/or database scripts. The method includes selecting at least one data source having the data stored in a database, extracting at least a selected portion of the data from the data source into the database without further input, automatically formatting the extracted data according to a predefined format, and analyzing the formatted data according to a predefined report structure.

In another aspect, a network-based system for archiving and analyzing manufacturing execution data stored on at least one manufacturing data source database is provided, wherein the data includes database tables, database views, and/or database scripts. The system includes a client system, a database for storing information, and a server system coupled to the client system and the database. The server system is configured to receive a user selection of the at least one manufacturing data source having the data stored thereon, extract at least a selected portion of the data from the manufacturing data source without further input from the user, store the extracted data in the database, automatically format the stored data in a predefined format, and analyze the formatted data according to a predefined report format.

In another aspect, a computer is coupled to a database for archiving and analyzing manufacturing execution data stored in at least one manufacturing data source database. The computer is in communication with a client system, and is programmed to receive a user selection of the data source having the data stored thereon including database tables, database views, and/or database scripts, extract at least a selected portion of the data from the data source without further input from the user, store the extracted data in the database, automatically format the stored data in a predefined format, and analyze the formatted data according to a predefined report format.

### BRIEF DESCRIPTION OF THE DRAWINGS

Figure 1 is a simplified block diagram of an exemplary system;

Figure 2 is an expanded block diagram of an exemplary system architecture of the system shown in Figure 1;

Figure 3 is an exemplary OLAP cube that is created within the system shown in Figures 1 and 2; and

Figure 4 is a flowchart that illustrates an exemplary method for archiving and analyzing data using the system shown in Figures 1 and 2.

### DETAILED DESCRIPTION OF THE INVENTION

A computing device or computer such as described herein has one or more processors or processing units and a system memory. The computer typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although described in connection with an exemplary computing system environment, embodiments of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well known computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

In some embodiments, a processor includes any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term processor.

In some embodiments, a database includes any collection of data including hierarchical databases, relational databases, flat file databases, object-relational databases, object oriented databases, and any other structured collection of records or data that is stored in a computer system. The above examples are exemplary only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

Described in detail herein are exemplary embodiments of methods, systems, and computers that facilitate generating enterprise reports relating to enterprise data, such as manufacturing execution data and, more particularly, constitute exemplary means for archiving and analyzing manufacturing execution data stored on at least one manufacturing data source. Generating enterprise reports using such a system facilitates lowering a total cost of ownership because installation, maintenance, and use are simplified such that users are not required to possess a specialized skill set. Rather, users may aggregate all available data or may choose only a subset of data. Moreover, the embodiments described herein facilitate providing increased scalability, portability, and ease of redeployment from one site to another. Further, the embodiments described herein facilitate providing a customizable reporting mechanism that enables users to modify predefined metric formulas without requiring the users to write program code.

Technical effects of the methods, systems, and computers described herein include at least one of (a) selecting one or more data sources having database tables and/or database scripts stored thereon; (b) extracting at least a portion of the data stored on the data sources to a centralized database according to a user-selected time table; (c) assigning common process attributes to the extracted data within the central database; (d) aggregating the data into a predefined data structure according to an event time, an event location, and/or a relationship between events; (e) formatting the data according to a predefined format; and (f) analyzing the formatted data to facilitate faster reporting using predefined report structures.

The methods, systems, and computers described herein are not limited to the specific embodiments described herein. For example, components of each system and/or steps of each method may be used and/or practiced independently and separately from other components and/or steps described herein. In addition, each component and/or step may also be used and/or practiced with other assembly packages and methods.

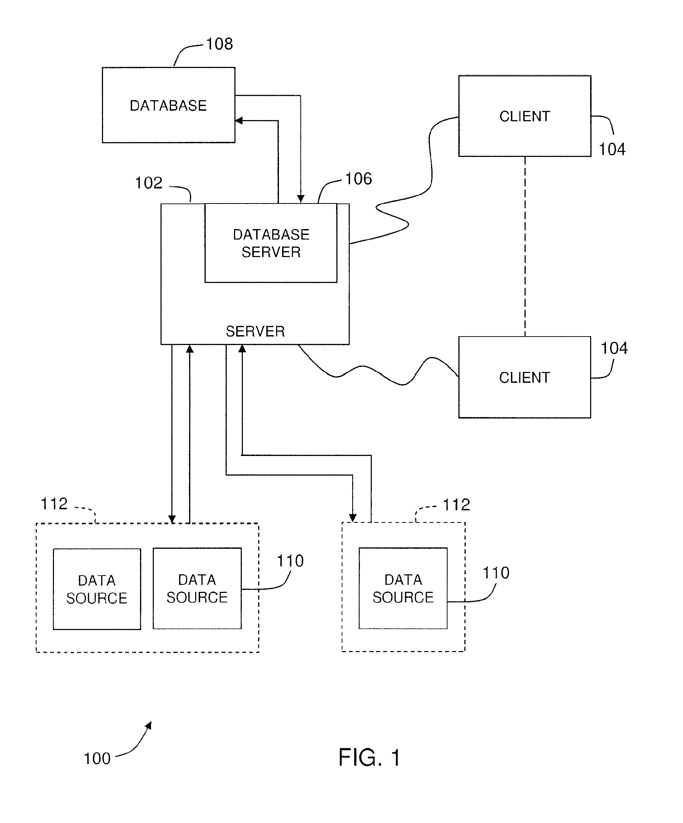

Figure 1 is a simplified block diagram of an exemplary system 100 in accordance with one embodiment. In the exemplary embodiment, system 100 includes a server system 102, and a plurality of client sub-systems, also referred to as client systems 104, connected to server system 102. In one embodiment, client systems 104 are computers including a web browser and/or a client software application, such that server system 102 is accessible to client systems 104 over a network, such as the Internet and/or an intranet. Client systems 104 are interconnected to the Internet through many interfaces including a network, such as a local area network (LAN), a wide area network (WAN), dial-in-connections, cable modems, wireless modems, and/or special high-speed Integrated Services Digital Network (ISDN) lines. As described above, client systems 104 may be any device capable of interconnecting to the Internet including a computer, web-based phone, personal digital assistant (PDA), or other web-based connectable equipment. A database server 106 is connected to a database 108 containing information on a variety of matters, such as financial transaction card payment data. In one embodiment, centralized database 108 is stored on server system 102 and is accessed by potential users at one of client systems 104 by logging onto server system 102 through one of client systems 104. In an alternative embodiment, database 108 is stored remotely from server system 102 and may be non-centralized.

Moreover, in the exemplary embodiment, system 100 includes one or more remote data sources 110. Each data source 110 stores production data, such as manufacturing execution data. More specifically, each data source 110 stores production data for a particular site 112. Site 112 may include a single data source 110 or may include multiple data sources 110. Server system 102 accesses each remote data source 110 over a network, such as the Internet and/or an intranet. In some embodiments, data sources 110 are also accessible by client system 104 over a network, such as the Internet and/or an intranet.

As discussed below, production data including manufacturing execution data can be stored within data sources 110 and may be extracted by server system 102 for archiving and analysis within database 108. For example, database 108 may include data related to production, downtime, or waste using keys to dimensions that show context for measures such as downtime production amounts, downtime durations, or waste amounts. Moreover, database 108 may include a time for each datum that has been entered or modified within database 108 and/or a time relating to an event corresponding to a production operation. Because database 108 may include data extracted from multiple data sources 110, each datum stored within database 108 is marked by an identifier such as a site key that corresponds to site 112 that includes the relevant data source 110 for each datum.

The embodiments illustrated and described herein as well as embodiments not specifically described herein but within the scope of aspects of the invention constitute exemplary means for generating enterprise reports relating to enterprise data, such as manufacturing execution data, and more particularly, constitute exemplary means for archiving and analyzing manufacturing execution data stored on at least one manufacturing data source. For example, server system 102 or client system 104, or any other similar computer device, programmed with computer-executable instructions illustrated in Figure 1 constitutes exemplary means for archiving and analyzing manufacturing execution data stored on at least one manufacturing data source.

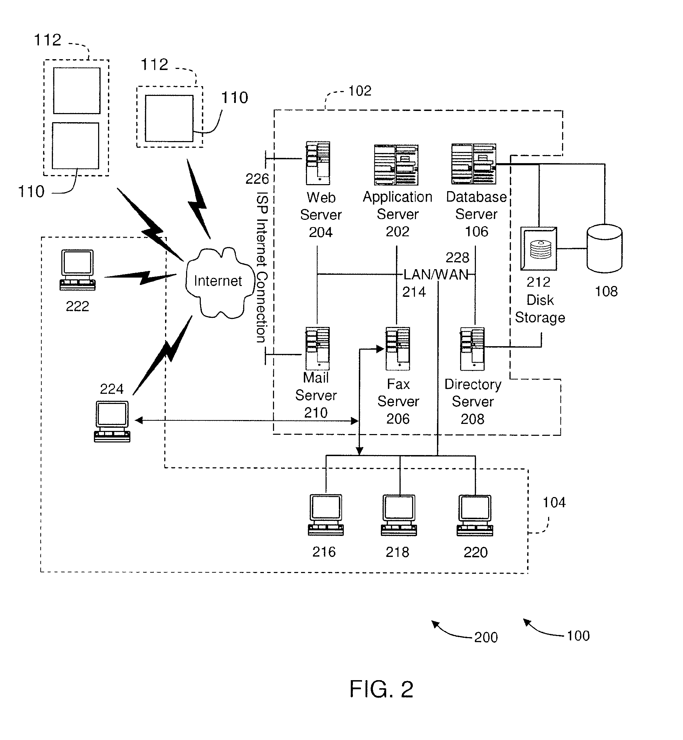

Figure 2 is an expanded block diagram of an exemplary embodiment of a system architecture 200 of system 100 (shown in Figure 1) in accordance with one embodiment. Components in system architecture 200, identical to components of system 100, are identified in Figure 2 using the same reference numerals as used in Figure 1. System 200 includes server system 102 and client systems 104. Server system 102 further includes database server 106, an application server 202, a web server 204, a fax server 206, a directory server 208, and a mail server 210. A disk storage unit 212 is coupled to database server 106 and directory server 208. Examples of disk storage unit 212 include, but are not limited to including, a Network Attached Storage (NAS) device and a Storage Area Network (SAN) device. Database server 106 is also coupled to database 108. Servers 106, 202, 204, 206, 208, and 210 are coupled in a local area network (LAN) 214. Client systems 104 may include a system administrator workstation 216, a user workstation 218, and a supervisor workstation 220 coupled to LAN 214. Alternatively, client systems 104 may include workstations 216, 218, 220, 222, and 224 that are coupled to LAN 214 using an Internet link or are connected through an intranet.

Each client system 104, including workstations 216, 218, and 220, is a personal computer having a web browser and/or a client application. Server system 102 is configured to be communicatively coupled to client systems 104 to enable server system 102 to be accessed using an Internet connection 226 provided by an Internet Service Provider (ISP). The communication in the exemplary embodiment is illustrated as being performed using the Internet, however, any suitable wide area network (WAN) type communication can be utilized in alternative embodiments, that is, the systems and processes are not limited to being practiced using the Internet. In addition, local area network 214 may be used in place of WAN 228. Further, fax server 206 may communicate with remotely located client systems 104 using a telephone link.

Moreover, in the exemplary embodiment, server system 102 is communicatively coupled to one or more sites 112, which include, but are not limited to only including, manufacturing sites. Each site 112 includes one or more data sources 110 that store data, such as manufacturing execution data. Server system 102 is configured to be communicatively coupled to each site 112 to enable server system 102 to access each data source 110 using Internet connection 226. The communication in the exemplary embodiment is illustrated as being performed using the Internet, however, any suitable wide area network (WAN) type communication can be utilized in alternative embodiments, that is, the systems and processes are not limited to being practiced using the Internet. In addition, local area network 214 may be used in place of WAN 228. Server system 102 is further configured to extract data from each data source 110 that is specified as a data origin. More specifically, to facilitate scalability of system 200, server system 102 is configured to automatically determine whether a new site 112 has been added to system 200, and to connect to the new site 112 when the new site 112 is added. Server system 102 extracts the data and stores the data within database 108. More specifically, server system 102 extracts the data, formats the data into a specified format by assigning common process attributes according to a known standard, such as S95, and aggregates the formatted data. For example, the data is aggregated into a series of on-line analytical processing (OLAP) cubes to facilitate fast analysis and an elimination of required knowledge as to how to assemble database queries for reporting purposes. Moreover, server system 102 automatically extracts the data from a data source 110 that is newly added to system 200 via the addition of a new site 112.

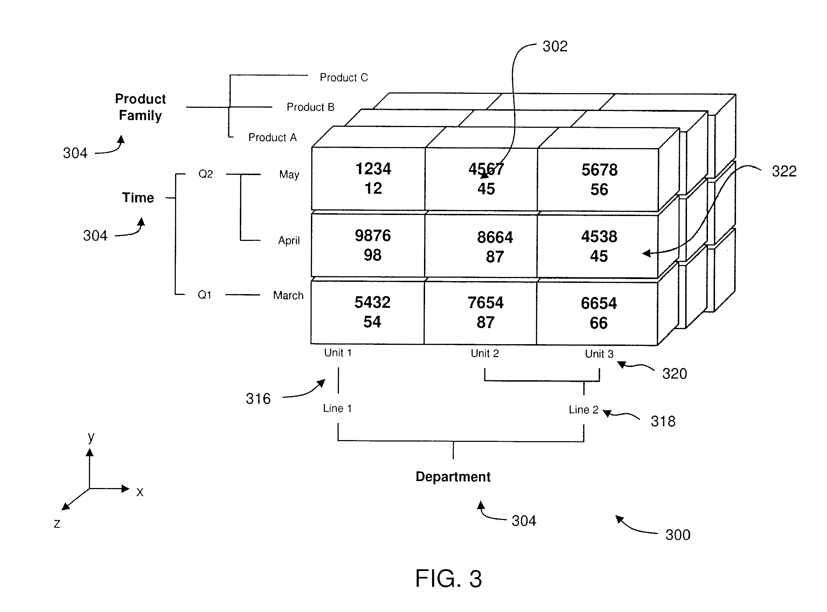

Figure 3 is an exemplary OLAP cube 300 that is formed within database 108 by server system 102 (both shown in Figure 1). More specifically, server system 102 extracts production data from one or more data sources 110 (shown in Figure 1) and transforms the data into a reporting datamart for use in on-line analytical processing. OLAP cubes provide a new arrangement of data that is organized in arrays to enable fast analysis and/or to eliminate a need for users to possess specialized skills such as database querying techniques.

In the exemplary embodiment, OLAP cube 300 is organized into a multidimensional structure that is defined by a set of measures 302 that are indexed by dimensions 304 on which measures 302 depend. Examples of measures 302 include, but are not limited to only including, production amount and waste amount during production. Examples of dimensions 304 include, but are not limited to only including, production units and time. OLAP cube 300 includes two measures 302. More specifically, first measure 306 is a production value and second measure 308 is a waste value. Moreover, OLAP cube 300 includes three dimensions 304, each of which is associated with one of an x-axis, a y-axis, and a z-axis. More specifically, a first dimension 310 represents a department and is arranged consistent with the x-axis. A second dimension 312 represents a time and is arranged consistent with the y-axis, and a third dimension 314 represents a product family and is arranged consistent with the z-axis. Each dimension 304 includes one or more attributes 316. Attributes 316 may be organized into hierarchies. For example, first dimension 310, which represents a department, includes a hierarchy in which a first level 318 includes a second level 320. More specifically, as shown in Figure 3, second level 320 includes a Unit 2 and a Unit 3, and rolls up to first level 318, which includes a Line 2. Moreover, when a new site 112 (shown in Figure 1) and/or a new data source 110 is added to system 100 (shown in Figure 1), server system 102 automatically determines measure 302 for each dimension 304 as soon as the new site 112 and/or data source 110 is detected by server system 102. Further, server system 102 combines common members of dimension 304 using a cross-reference feature. For example, when an existing site, Site A, includes products Prod1 and Prod2, and a new site, Site B, is added including products Prod3, Prod4, and ProdONE, server system 102 automatically detects the additional products Prod3, Prod4, and ProdONE. Server system 102 also automatically determines that Site A - Prod1 and Site B - ProdONE should be analyzed as the same product. Server system 102 also displays a single consolidated data set for Site A - Prod1 and Site B - ProdONE.

In the exemplary OLAP cube 300 of Figure 3, each cell 322 includes a first measure 306 and a second measure 308 for specific values of first dimension 310, second dimension 312, and third dimension 314. For example, each cell 322 includes a production amount and a waste amount for specific department, time, and product family values. More specifically, for March, there were 66 units of waste out of 6654 units produced on Unit 3 of Product A. In the exemplary embodiment, hierarchies are used to aggregate measures in higher-level summaries and to drill down to detailed information from a summary report. In one embodiment, a portion of the aggregations are pre-calculated and stored within OLAP cube 300 to facilitate avoiding repeated processor-intensive calculations. Such pre-calculations enable reports covering long time spans, or other large aggregations, to be completed more quickly and with less use of system resources.

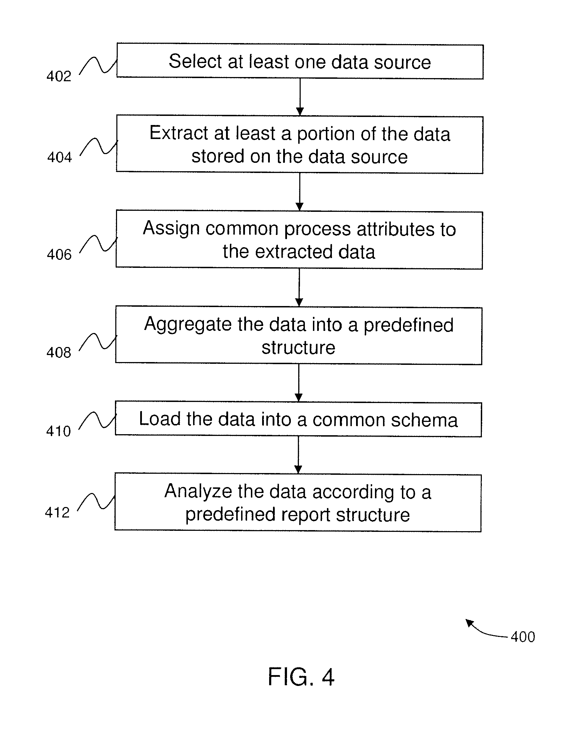

Figure 4 is a flowchart 400 that illustrates an exemplary method for archiving and analyzing data, such as manufacturing execution data using a client-server system, such as system 100 (shown in Figure 1). In the exemplary embodiment, a user designates or selects 402 one or more data sources 110 (shown in Figure 1) having the data stored thereon. For example, the user may select only a single data source 110. The user may also select multiple data sources 110 located at different sites 112 (shown in Figure 1). The data may include database tables, database views, and/or database scripts relating to the collection, manipulation, and/or analysis of production data. Server system 102 then proceeds through an automatic installation and configuration routine, which includes forming database 108 (both shown in Figure 1). Moreover, in one embodiment, server system 102 is capable of automatically detecting a new site 112 and/or a new data source 110 when added to system 100. Further, in such an embodiment, server system 102 automatically configures itself and database 108 to accept, format, store, and/or analyze data from such a newly added data source 110 and/or site 112.

Once server system has completed the installation and configuration routine, server system 102 extracts 404 data from data source 110 and stores the data in database 108. More specifically, server system 102 connects to the selected data source 110 via a network connection, such as the Internet or an intranet (both shown in Figure 2). Server system 102 then extracts at least a portion of the data stored by data source 110. In one embodiment, server system 102 extracts all of the data stored by data source 110. In an alternative embodiment, the user also selects a portion of the data stored by data source 110 that is to be extracted. More specifically, the user selects or modifies a portion of the data to be extracted using an administration interface. Moreover, in one embodiment, the user creates an extraction schedule that specifies a selected extraction frequency and/or the selected portion of the data to be extracted. In some embodiments, the user may also modify the schedule using the administration interface. Further, in one embodiment, server system 102 extracts only data that is newly acquired by data source 110 since a previous extraction was completed. If no previous extraction has been completed, server system 102 may then extract all of the data stored by data source 110 or extract only a user-selected portion of the data stored by data source 110.

Moreover, and without requiring further user input, server system 102 automatically formats the extracted data according to a predefined format. More specifically, server system 102 assigns 406 common process attributes to the extracted data, aggregates 408 the data into a predefined data structure, and loads 410 the data into a common schema. For example, a first data source may use a first schema to store data, and a second data source may use a second schema that is different than the first schema. When server system 102 extracts data from each data source 110, server system 102 may need to modify the data stored in either of first data source and second data source to ensure that the data is stored in database 108 using common attributes. To ensure such commonality, server system 102 may add a new column to a database table, or may specify a default value for each column within each database table. Ensuring such commonality to data extracted from multiple data sources 110 facilitates faster processing and lower resource usage by server system 102.

Further, server system 102 aggregates the extracted data into a predefined data structure such as OLAP cube 300 (shown in Figure 3). More specifically, server system 102 aggregates the data based on an event time, an event location, and/or a relationship between a first data element and a second data element. During aggregation server system 102 prorates the data, which allocates each measure 302 across multiple dimensions 304 (both shown in Figure 3). For example, if a particular production event lasts from 6:30 AM until 8:00 AM, and shifts change at 7:00 AM, server system 102 allocates approximately one third of the production event to the shift working from 6:30 AM to 7:00 AM and approximately two thirds of the production event to the shift working from 7:00 AM to 8:00 AM. For each dimension 304 within OLAP cube 300 that may change during a particular event, server system 102 records a start time and an end time into database 108. Then, for each data table, server system 102 generates a companion prorating table that includes weighting factors. Based on the contents of each data table and each associated prorating table, server system 102 generates a third table that splits the time span for each event into multiple sub-events according to changes in production days, crews, shifts, and/or non-productive status. Server system 102 may also aggregate the data according to a timeline for each production unit in order to determine efficiency-related statistics for a product, a production crew, and/or a production line. During data aggregation, server system 102 also takes production downtime into consideration by storing each downtime event in database 108. Similarly, server system 102 stores waste events in database 108.

In the exemplary embodiment, once the data has been aggregated into OLAP cube 300, server system 102 analyzes 412 the formatted data according to a predefined report structure. More specifically, server system 102 generates a report for display to a user via client system 104 (shown in Figure 1). An example of such a report structure is a production event matrix, which displays production data such as time, department, production line, production unit, product family, and/or product. Another example is a waste drilldown, which displays a waste count by production unit. When a user selects a particular unit, a more detailed report is shown for the selected unit including waste reasons. Further examples of reports include production conformance by crew and waste amount by equipment and crew. In one embodiment, server system 102 exports a report to a spreadsheet program on client system 104, such as Microsoft Excel® (Excel® is a registered trademark of Microsoft Corporation, Redmond, WA, USA).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.
Aspects of the present invention are defined in the following numbered clauses:
1. A method for archiving and analyzing manufacturing execution data using a server coupled to a database, said method comprising:
   selecting at least one data source having the manufacturing execution data stored in the database, the manufacturing execution data including at least one of database tables, database views, and database scripts;
   extracting at least a selected portion of the manufacturing execution data from the at least one data source into the database without further input;
   automatically formatting the extracted manufacturing execution data according to a predefined format; and
   analyzing the formatted manufacturing execution data according to a predefined report structure.
2. A method in accordance with Clause 1, further comprising creating an extraction schedule that specifies at least one of a selected extraction frequency and the selected portion of the manufacturing execution data to be extracted.
3. A method in accordance with Clause 1 or Clause 2, wherein extracting at least a selected portion of the manufacturing execution data comprises extracting a portion of the manufacturing execution data that is newly acquired by the at least one data source since a previous extraction was completed.
4. A method in accordance with any one of the preceding Clauses, wherein extracting at least a selected portion of the manufacturing execution data comprises automatically detecting a newly added data source and extracting at least a selected portion of the manufacturing execution data from the newly added data source into the database.
5. A method in accordance with Clause 2, wherein formatting the extracted manufacturing execution data comprises:
   assigning common process attributes to the extracted manufacturing execution data;
   aggregating the manufacturing execution data into a predefined data structure; and
   loading the manufacturing execution data into a common schema.
6. A method in accordance with Clause 5, wherein aggregating the manufacturing execution data comprises aggregating the manufacturing execution data based on at least one of an event time, an event location, and a relationship between a first data element and a second data element.
7. A method in accordance with Clause 5 or Clause 6, wherein aggregating the manufacturing execution data comprises aggregating the manufacturing execution data such that manufacturing execution data related to a single product manufactured at multiple sites is cross-referenced to form a single set of manufacturing execution data.
8. A method in accordance with any one of Clauses 5 to 7, further comprising modifying at least one of the extraction schedule, the selected portion of the manufacturing execution data to be extracted, and the predefined data structure using an administrator user interface.
9. A network-based system for archiving and analyzing manufacturing execution data stored on at least one manufacturing data source database, said system comprising:
   a client system;
   a database for storing information; and
   a server system coupled to said client system and said database, said server system configured to:
      receive a user selection of the at least one manufacturing execution data source database having the manufacturing execution data stored thereon, the manufacturing execution data including at least one of database tables, database views, and database scripts;
      extract at least a selected portion of the manufacturing execution data from the at least one manufacturing execution data source database without further input from the user;
      store the extracted manufacturing execution data in said database;
      automatically format the stored manufacturing execution data in a predefined format; and
      analyze the formatted manufacturing execution data according to a predefined report format.
10. A system in accordance with Clause 9, wherein said server system is configured to automatically detect a newly added data source and to extract at least a selected portion of the manufacturing execution data from the newly added data source into said database.
11. A system in accordance with Clause 8 or Clause 9, wherein said server system is configured to assign common process attributes to the extracted manufacturing execution data, aggregate the extracted manufacturing execution data into a predefined data structure, and load the aggregated manufacturing execution data into a common schema.
12. A system in accordance with Clause 11, wherein said server system is configured to aggregate the manufacturing execution data such that manufacturing execution data related to a single product manufactured at multiple sites is cross-referenced to form a single set of manufacturing execution data within said database.
13. A system in accordance with any one of Clauses 9 to 12, wherein the at least one manufacturing execution data source database includes a plurality of data sources, said server system is further configured to extract at least a selected portion of the manufacturing execution data from each of the plurality of data sources.
14. A computer coupled to a database for archiving and analyzing manufacturing execution data stored in at least one manufacturing data source database, said computer in communication with a client system, said computer programmed to:
   receive a user selection of the at least one manufacturing execution data source database having the manufacturing execution data stored thereon including at least one of database tables, database views, and database scripts;
   extract at least a selected portion of the manufacturing execution data from the at least one manufacturing execution data source database without further input from the user;
   store the extracted data in the database;
   automatically format the stored manufacturing execution data in a predefined format; and
   analyze the formatted manufacturing execution data according to a predefined report format.
15. A computer in accordance with Clause 14, wherein said computer is programmed to create an extraction schedule that specifies at least one of a selected extraction frequency and an extraction start time.
16. A computer in accordance with Clause 14 or Clause 15, wherein said computer is programmed to automatically detect a newly added data source and to extract at least a selected portion of the manufacturing execution data from the newly added data source into said database.
17. A computer in accordance with any one of Clauses 14 to 16, wherein said computer is programmed to assign common process attributes to the extracted manufacturing execution data, aggregate the manufacturing execution data into the predefined data format, and load the aggregated manufacturing execution data into a common schema.
18. A computer in accordance with Clause 17, wherein said computer is programmed to aggregate the manufacturing execution data based on at least one of an event time, an event location, and a relationship between a first data element and a second data element.
19. A computer in accordance with Clause 17, wherein said computer is programmed to aggregate the manufacturing execution data such that manufacturing execution data related to a single product manufactured at multiple sites is cross-referenced to form a single set of manufacturing execution data.
20. A computer in accordance with any one of Clauses 14 to 19, wherein the at least one manufacturing execution data source database includes a plurality of manufacturing execution data source databases, said computer is programmed to extract at least a selected portion of the manufacturing execution data from each of the plurality of manufacturing execution data source databases.

## Claims

1. A network-based system (100) for archiving and analyzing manufacturing execution data stored on at least one manufacturing data source database, said system comprising:
a client system (104);
a database (108) for storing information; and
a server system (102) coupled to said client system and said database, said server system configured to:
receive a user selection of the at least one manufacturing execution data source database having the manufacturing execution data stored thereon, the manufacturing execution data including at least one of database tables, database views, and database scripts;
extract (404) at least a selected portion of the manufacturing execution data from the at least one manufacturing execution data source database without further input from the user;
store the extracted manufacturing execution data in said database;
automatically format the stored manufacturing execution data in a predefined format; and
analyze (412) the formatted manufacturing execution data according to a predefined report format.

2. A system (100) in accordance with Claim 1, wherein said server system (102) is configured to automatically detect a newly added data source (110) and to extract (404) at least a selected portion of the manufacturing execution data from the newly added data source into said database (108).

3. A system (100) in accordance with Claim 1 or Claim 2, wherein said server system (102) is configured to assign (406) common process attributes to the extracted manufacturing execution data, aggregate (408) the extracted manufacturing execution data into a predefined data structure, and load (410) the aggregated manufacturing execution data into a common schema.

4. A system (100) in accordance with Claim 3, wherein said server system (102) is configured to aggregate (408) the manufacturing execution data such that manufacturing execution data related to a single product manufactured at multiple sites (112) is cross-referenced to form a single set of manufacturing execution data within said database (108).

5. A system (100) in accordance with any one of the preceding Claims, wherein the at least one manufacturing execution data source database includes a plurality of data sources (110), said server system (102) is further configured to extract (404) at least a selected portion of the manufacturing execution data from each of the plurality of data sources.

6. A computer coupled to a database (108) for archiving and analyzing manufacturing execution data stored in at least one manufacturing data source database, said computer in communication with a client system (104), said computer programmed to:
receive a user selection of the at least one manufacturing execution data source database having the manufacturing execution data stored thereon including at least one of database tables, database views, and database scripts;
extract (404) at least a selected portion of the manufacturing execution data from the at least one manufacturing execution data source database without further input from the user;
store the extracted data in the database;
automatically format the stored manufacturing execution data in a predefined format; and
analyze (412) the formatted manufacturing execution data according to a predefined report format.

7. A computer in accordance with Claim 6, wherein said computer is programmed to create an extraction schedule that specifies at least one of a selected extraction frequency and an extraction start time.

8. A computer in accordance with Claim 6 or Claim 7, wherein said computer is programmed to automatically detect a newly added data source (110) and to extract (404) at least a selected portion of the manufacturing execution data from the newly added data source into said database (108).

9. A computer in accordance with any one of Claims 6 to 8, wherein said computer is programmed to assign (406) common process attributes to the extracted manufacturing execution data, aggregate (408) the manufacturing execution data into the predefined data format, and load (410) the aggregated manufacturing execution data into a common schema.

10. A computer in accordance with Claim 9, wherein said computer is programmed to aggregate (408) the manufacturing execution data based on at least one of an event time, an event location, and a relationship between a first data element and a second data element.

11. A computer in accordance with Claim 9, wherein said computer is programmed to aggregate the manufacturing execution data such that manufacturing execution data related to a single product manufactured at multiple sites is cross-referenced to form a single set of manufacturing execution data.

12. A computer in accordance with any one of Claims 6 to 11, wherein the at least one manufacturing execution data source database includes a plurality of manufacturing execution data source databases, said computer is programmed to extract at least a selected portion of the manufacturing execution data from each of the plurality of manufacturing execution data source databases.

13. A method for archiving and analyzing manufacturing execution data using a server coupled to a database, said method comprising:
selecting at least one data source having the manufacturing execution data stored in the database, the manufacturing execution data including at least one of database tables, database views, and database scripts;
extracting at least a selected portion of the manufacturing execution data from the at least one data source into the database without further input;
automatically formatting the extracted manufacturing execution data according to a predefined format; and
analyzing the formatted manufacturing execution data according to a predefined report structure.

14. A method in accordance with Claim 13, further comprising creating an extraction schedule that specifies at least one of a selected extraction frequency and the selected portion of the manufacturing execution data to be extracted.

15. A method in accordance with Claim 13 or Claim 14, wherein extracting at least a selected portion of the manufacturing execution data comprises extracting a portion of the manufacturing execution data that is newly acquired by the at least one data source since a previous extraction was completed.
